# EUROPEAN PATENT APPLICATION

(11) **EP 4 378 821 A1**
(43) Date of publication of application: **05.06.2024**
(21) Application number: 22210551.2
(22) Date of filing: 30.11.2022
(51) Int. Cl.: B64C 1/18, B64D 11/06

(54) **FLOOR SYSTEM FOR A CABIN OF A VEHICLE WITH FORM-FITTING FLOOR PANEL CONNECTION**

(71) Applicant: Airbus Operations GmbH, 21129 Hamburg (DE)
(72) Inventor: Poppe, Andreas, 21129 Hamburg (DE); Benthien, Hermann, 21129 Hamburg (DE); Wienting, Jens, 21129 Hamburg (DE)
(74) Representative: LKGLOBAL Lorenz & Kopf Patentanwalt Attorney at Law PartG mbB

(57) **Abstract**

A floor system (32, 78) for a cabin of a vehicle (92) is proposed, comprising a floor panel (2, 22, 26, 88), a seat rail (34) having an installation surface (52, 64), a base surface (46) underneath the installation surface (52, 64) in a distance thereto, and at least one recess (45) between the installation surface (52, 64) and the base surface (46) and extending along the seat rail (34), wherein the floor panel (2, 22, 26, 88) has a top surface (12), a bottom surface (14) and at least one connection edge (10) extending between the top surface (12) and the bottom surface (14), wherein the seat rail (34) is adapted to vertically clamp the floor panel (2, 22, 26, 88) inside the at least one recess (45), wherein the at least one connection edge (10) has a continuously undulating or serrated edge surface, and wherein the at least one recess (45) comprises an outwards-facing lateral receiving surface (47, 74) that is at least partially complementary to the edge surface of the at least one connection edge (10) to provide a form-fit engagement with the floor panel (2, 22, 26, 88).

## Description

### Technical field

The invention relates to a floor system for a cabin of a vehicle, a cabin of an aircraft as well as an aircraft having such a cabin.

### Background of the invention

In a cabin of vehicle, such as an aircraft, often rail systems and floor panels are installed. For example, it is common to attach passenger seats, cabin monuments and the like on seat rails, which extend parallel to a longitudinal axis of the aircraft, are arranged on or in a cabin floor and comprise suitable receptacles for receiving fittings. Seat rails are commonly attached to crossbeams of a vehicle structure and often carry floor panels that constitute the cabin floor. For this purpose, the floor panels are often connected to the seat rails, for example, via bolt connections at their edges. A seat rail often comprises a first chord, a second chord arranged at a vertical distance therefrom and a web running in between both chords. A direction of force between a floor panel bolted to a seat rail and the structure can thus be quite complex and not straight. In addition to the bolted connection, sealings are required at several points to prevent moisture stemming from the cabin to pass through to the seat rail.

### Summary of the invention

It is an object of the invention to propose an alternative floor system having seat rails and floor panels, which are simple to manufacture, mount and seal and provide a simplified load path.

This object is met by a floor system for a cabin of an aircraft having the features of independent claim 1. Advantageous embodiments and further improvements may be gathered from the subclaims and the following description.

A floor system for a cabin of a vehicle is proposed, comprising a floor panel, a seat rail having an installation surface, a base surface underneath the installation surface in a distance thereto, and at least one recess between the installation surface and the base surface and extending along the seat rail, wherein the floor panel has a top surface, a bottom surface and at least one connection edge extending between the top surface and the bottom surface, wherein the seat rail is adapted to vertically clamp the floor panel inside the at least one recess, wherein the at least one connection edge has a continuously undulating or serrated edge surface, and wherein the at least one recess comprises an outwards-facing lateral receiving surface that is at least partially complementary to the edge surface of the at least one connection edge to provide a form-fit engagement with the floor panel.

The overall design of the seat rail may correspond to common designs of seat rails, in particular for aircraft applications. However, certain conceivable embodiments are introduced further below.

The installation surface may be considered the top surface of the seat rail, which is accessible from inside the cabin. The installation surface may comprise various receptacles arranged in a predetermined spacing distributed along the extension of the seat rail. The receptacles are provided for receiving fittings for attaching objects, such as seats, cabin monuments or the like, to the seat rail. Basically, all known receptacles could be used in the installation surface.

The base surface is arranged underneath the installation surface in a predetermined distance thereto. The distance may slightly exceed the thickness of the floor panel, as the at least one lateral recess is designed for laterally inserting the floor panel into the lateral recess.

Underneath the base surface, the seat rail may comprise a common setup, which may include, besides other features, chords, flanges, a web or the like, that allow to place the seat rail onto a crossbeam inside the vehicle structure. For fastening the floor panel in the vertical direction, the seat rail is adapted to clamp the floor panel vertically inside the recess, such that it is pressed onto the base surface through a vertical clamping force. A possible embodiment for achieving this is described further below.

A gist of the invention lies not only in providing a vertical clamping, but also a simple way of fastening the floor panel in the longitudinal and lateral directions. For this, the floor panel does not have a completely straight connection edge that is to be placed in the lateral recess. Instead, the connection edge has an undulating or serrated shape that leads to a consecutive arrangement of lateral cutouts along the connection edge extension, which lateral cutouts can be brought into a form fit engagement with complementary protrusions inside the lateral recess. It is not strictly required to provide a lateral receiving surface that is completely complementary to the connection edge. However, it may be possible to provide a series of protrusions, resting surfaces or components inside the lateral recess that are adequately spaced along the seat rail extension and fit into the connection edge of the floor panel.

For example, an undulating connection edge may comprise a contour of a sine wave, which may be brought into a form fit engagement with a series of correspondingly spaced cylindrical surfaces. A serrated connection edge may comprise a series of triangular cutouts, which may also be brought into a form-fit engagement of correspondingly spaced cylindrical surfaces. Many other variants are possible that allow a form-fit engagement between the connection edge and the receiving surface to secure the respective floor panel from moving in the longitudinal or lateral direction.

In an advantageous embodiment, the floor panel comprises a honeycomb structure enclosed between a top cover and a bottom cover, wherein the connection edge comprises a core filling material reaching into open cells of the honeycomb structure to increase the stability of the connection edge. The honeycomb structure is enclosed by the top cover and the bottom cover and is commonly made from a lightweight material, such as a paper-like material comprising reinforcement fibers, e.g. aramid fibers, which are infiltrated with a resin. The top cover and the bottom cover may be made from a fiber reinforced plastic material as well, such as CFRP. The floor panel thus has a distinctly low weight and provides a sufficient mechanical stability for carrying passengers and objects. However, providing an undulating or serrated structure at the connection edge, cells of the honeycomb structure may be open to the lateral side. By using the core filling material, the open cells are filled and thus stabilized. It is conceivable to use an additional layer of the core filling material be placed along the whole connection edge, which leads to an additional stability, at least in the vertical direction.

In an advantageous embodiment, the core filling material comprises a plastic material. The plastic material may be chosen in accordance with the material used for honeycomb structure and/or the top cover and/or the bottom cover. It is conceivable that the core filling material comprises a thermoplastic material, such as polyetherketoneketone (PEKK), polyetheretherketone (PEEK), polyetherimide, polycarbonate, polypropylene, and others. Also, a thermoset material may be used. The plastic material may include reinforcement fibers, in particular short fibers embedded inside a thermoplastic or thermoset matrix.

In an advantageous embodiment, the floor panel comprises an edge cap laterally bonded to the floor panel, wherein the edge cap comprises the connection edge. The edge cap is an elongated element that is placed onto an edge of a main panel component of the floor panel, such that it encloses the edge of the main panel component laterally and both the top surface and the bottom surface in an edge region. For this, the edge cap may comprise a substantially U-shaped cross-sectional profile. The top surface and the bottom surface of the main panel component of the floor panel may comprise flat cut-outs or edge regions of the top cover or bottom cover having a reduced thickness to receive a respective part of the edge cap, such that the overall shape of the floor panel in the edge region is stepless and even. The outwards facing edge of the edge cap may comprise the connection edge with the undulating and serrated structure, and a honeycomb structure or another stiffening structure inside the floor panel will be protected from being damaged.

In an advantageous embodiment, the floor system further comprises a sealing component arranged on the top surface and/or the bottom surface of the floor panel adjacent to the connection edge. The sealing component may comprise an elongated sealing body that is arranged in an edge region of the top surface and/or the bottom surface. It is further conceivable to use a plurality of adjacent sealing components. By clamping the floor panel into the seat rail, the sealing component will be slightly compressed. The elasticity of the sealing component protects the clamped floor panel from an excessive clamping force and acts as a resilient element that continuously urges the floor panel towards the installation surface and the base surface.

In an advantageous embodiment, the connection edge comprises a series of cylindrical or partially spherical cutouts distributed on the connection edge in a distance to each other and at least reaching through the top surface of the floor panel. Spherical cutouts are capable of receiving spherical protrusions, stemming from spherical indentations in the installation surface. However, cylindrical cutouts may simply receive bushings or other hollow-cylindrical components that are arranged on the base surface and extended towards the installation surface. As stated above, several other types of cutouts are possible and are not ruled out by these embodiments.

In an advantageous embodiment, the seat rail has an installation rail component comprising the installation surface, a base rail component comprising the base surface, and a plurality of connecting components, wherein the connection components are connected to the base rail component and the installation rail component to arrange the base rail component and the installation rail component in a parallel alignment and to clamp the floor panel inbetween. By separating the seat rail into a base rail component and an insulation rail component, several advantages are achieved. For example, the base rail component may be made from an aluminium alloy, which is fixedly attached to crossbeams of the vehicle structure, and which is protected from corrosion through sealings. The installation rail component may be made from a different material, such as a stainless steel, titanium, a fiber reinforced plastic material, or the like. The installation rail component can be designed to be non-corroding, as it may become wet or humid during the operation of the vehicle. Both rail components can be connected to each other through connection components. In a simple case, the connection components may be fasteners, such as screws or bolts. However, also fastening bushings with an integrated hole for receiving fittings are possible. The connection components may be shaped to conform the connection edge of the floor panel. Also, since the installation rail component is removably attachable to the base rail component, the installation of the floor panel can be simplified. By fastening the installation rail component to the base rail component, the respective floor panel will be clamped.

In an advantageous embodiment, the installation rail component is substantially flat. The installation rail may thus comprise a strip-like structure, the width of which corresponds approximately to the width of the base surface of the base rail. The installation surface of the installation rail is intended to project into the cabin and will be used for fastening objects to the seat rail. The base surface and the installation rail are preferably aligned parallel to each other.

In an advantageous embodiment, the installation rail comprises a series of partially spherical indentations, wherein the partially spherical cutouts and the partially spherical indentations are correspondingly shaped. The installation rail thus fixes the floor panel simply through arranging the partially spherical cutouts underneath the spherical indentations. The spherical indentations may be used for receiving spherical, expandable fasteners to fasten objects to the installation rail.

In an advantageous embodiment, the installation rail comprises a series of through-holes, wherein the connection components have a hollow-cylindrical shape, and wherein the cutouts of the connection edge, the spacing of the through-holes and the hollow-cylindrical shape of the connection components correspond to each other, when the connection components are vertically arranged underneath the through-holes. This allows to provide an effective combination of components to clamp and fixate the floor panel, while the manufacturing effort for every component is simple.

In an advantageous embodiment, the connection edge and the lateral receiving surface comprise a non-corrosive material. For example, the connection edge may be made from a plastic material as stated above, in particular if an edge cap and/or a core filling material is used. The lateral receiving surface may belong to the installation rail or connection components, which may e.g. be made from titanium, stainless steel, or other suitable materials.

In an advantageous embodiment, the installation rail component is made from titanium. This leads to a lightweight, yet sturdy component that is capable of providing a load transfer between the base rail component and the objects attached to the installation rail.

The invention further relates to a cabin of an aircraft, having a floor comprising a floor system according to the above, wherein at least one object is arranged on the floor and attached to the seat rail. It is to be understood that a plurality of seat rails may be arranged in the cabin, wherein the seat rails are preferably aligned so as to be parallel to a longitudinal axis of the aircraft. Also, a plurality of floor panels may be provided, which constitute the floor of the cabin.

The invention also relates to an aircraft, comprising an aircraft structure and a cabin according to the above arranged therein.

### Brief description of the figures

In the following, the attached drawings are used to illustrate exemplary embodiments in more detail. The illustrations are schematic and not to scale. Identical reference numerals refer to identical or similar elements. They show:
Fig. 1 shows a spatial view of a floor panel.
Fig. 2a to 2e show further examples of a floor panel.
Fig. 3 shows a floor system having a base rail component, an installation rail component, and a floor panel.
Fig. 4 shows a modified installation rail component.
Fig. 5 shows an edge cap of a floor panel.
Fig. 6 shows a further exemplary embodiment of a floor system.
Fig. 7 shows an aircraft.

### Detailed description of exemplary embodiments

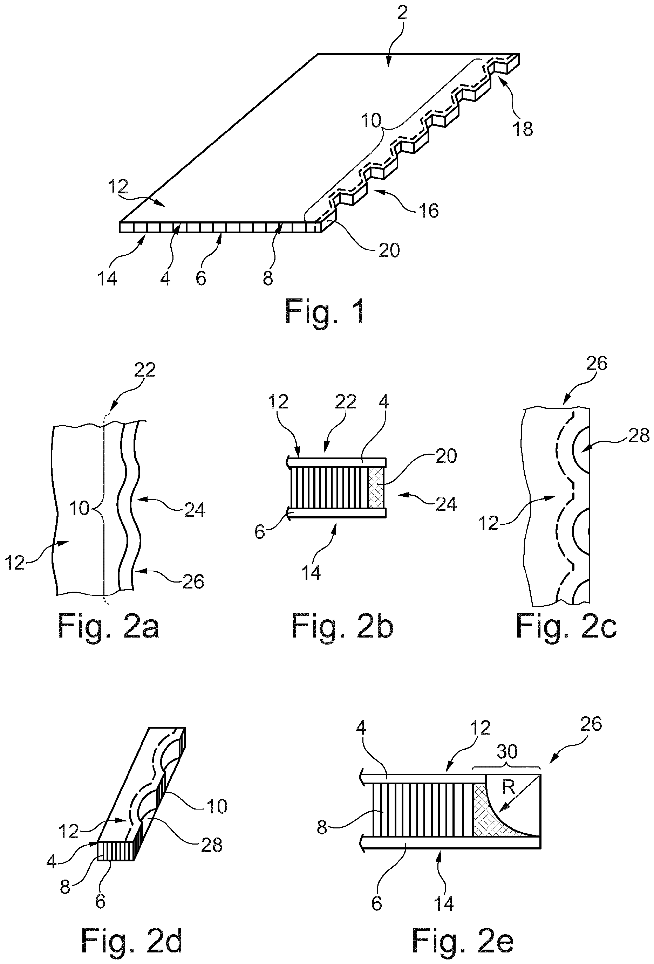

Fig. 1 shows a floor panel 2 for use in a floor system for a cabin of the vehicle. Here, the floor panel 2 comprises a top cover 4, a bottom cover 6 and a honeycomb core 8 sandwiched between the top cover 4 and the bottom cover 6. A connection edge 10 extends between a top surface 12 and a bottom surface 14 and runs along a lengthwise or widthwise extension along the floor panel 2. Here, the connection is 10 has a continuously serrated edge surface 16. This means, that a number of lateral cutouts 18 are distributed along the connection edge 10 and are spaced in an equidistant manner.

Due to providing the serrated structure at the connection edge 10, cells of the honeycomb core 8 facing the connection edge 10 may be cut open. However, in this exemplary embodiment, the connection edge 10 further comprises a core filling material 20, which reaches into open cells of the honeycomb core 8 to increase the stability of the connection edge 10. The core filling material 20 may be arranged only between the top cover 4 and the bottom cover 6 or it may also extend over the top cover 4 and at the bottom cover 6 to cover the whole height of the connection edge 10 from the bottom surface 14 to the top surface 12. The core filling material 20 may comprise a constant thickness along the connection edge 10. The connection edge 10 may thus completely reside in or is created by the core filling material 20.

The serrated shape of the floor panel 2 allows to provide a form fit engagement of the floor panel 2 with a lateral receiving surface shown further below.

Fig. 2a shows a floor panel 22 with a continuously undulating edge surface 24, which may correspond to a sine wave or a sequence of partial circles with alternating orientation. The undulating edge surface 24 thus has rounded cutouts 26, which may engage with complementary shaped components or protrusions.

Fig. 2b shows the floor panel 22 in a lateral sectional view. Here, the core filling material 20 is illustrated at the connection edge 10, which is comparable to the core filling material 20 shown in Fig. 1, but has another shape to provide the undulating edge surface 24.

Figs. 2c, 2d and 2e show a floor panel 26 with a connection edge 10 that is designed differently than in the previous exemplary embodiments. Here, spherical cutouts 28 are provided, which are indicated with a radius R. The cutouts 28 reach into the floor panel 26 from the top surface 12 towards the bottom surface 14 and end slightly above the bottom cover 6. The cutouts 28 may be provided by filling an edge region 30, which is wider than the radius R, with the core filling material 20 and creating the cutouts 28 in the core filling material 20 afterwards. These cutouts 28 are capable of engaging with protrusions having a spherical shape.

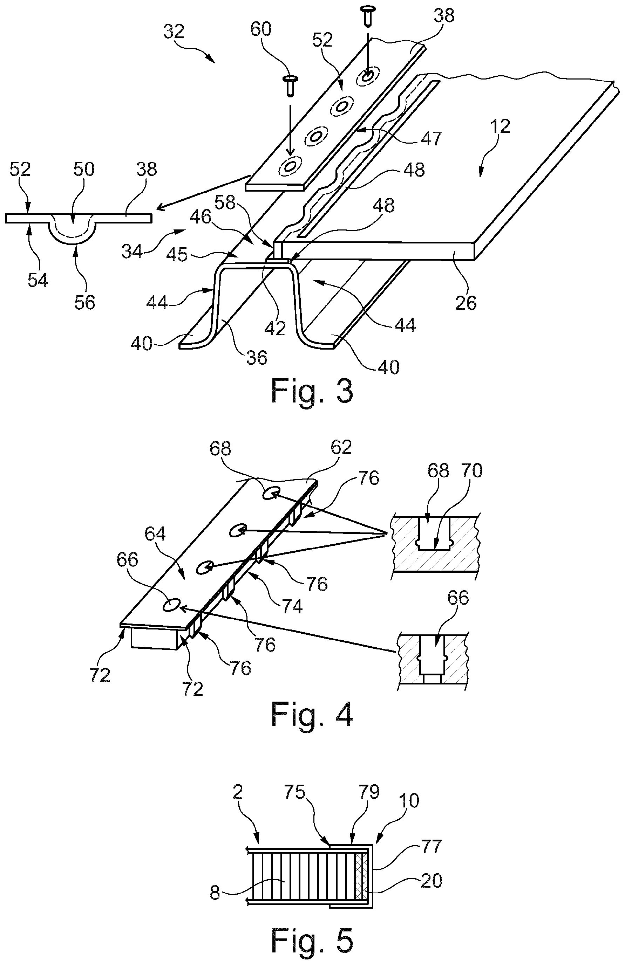

Fig. 3 shows a floor system 32 for a cabin of a vehicle. The floor system 32 comprises a seat rail 34 and a floor panel 26 as shown in figs. 2c to 2e. The seat rail 34 has a base rail component 36 and an installation rail component 38. Both are provided as separate components, which can be attached to each other to form the seat rail 34. The base rail component 36 exemplarily has an Omega-shape with bottom flanges 40 that may be placed on a cross beam of a vehicle structure. At an opposite side, a bridge section 42 is provided, which bridges two web sections 44 that extend substantially vertically upwards from the bottom flanges 40 and that comprises a base surface 46 on its top.

On the base surface 46, a sealing element 48 is provided. Exemplarily, it is created in the form of a flat stripe of an elastomer and serves for providing a fluid-tight sealing. The connection edge 10 of the floor panel 26 rests on the sealing element 48. Between the installation rail component 38 and the base surface 46, a lateral recess 45 is created, into which the floor panel 26 is placed. After placing the installation rail component 38 onto the floor panel 26, an outwards-facing lateral receiving surface 47 is created, depending on the shape of the installation rail component 38.

In this exemplary embodiment, the installation rail component 38 is an elongated component having a substantially flat shape. A series of spherical indentations 50 is distributed along the lengthwise extension of the installation rail component 38 and exemplarily have an equidistant spacing. The indentations 50 reach from an installation surface 52 at the top of the installation rail component 38 downwards. Thus, at an underside 54 of the installation rail 38, corresponding spherical protrusions 56 are created. The spherical protrusions 56 and the spherical cutouts 28 of the floor panel 26 are designed to conform each other, to let the installation rail 38 and the floor panel 26 engage with each other by placing the installation rail component 38 on the connection edge 10 of the floor panel 26. The spherical protrusions 56 form the lateral receiving surface 47.

The base rail component 36 exemplarily comprises a series of boreholes 58 in the base surface 46, which allow to receive fasteners 60 that are provided to fasten the installation rail component 38 to the base rail component 36. For this purpose, some of the spherical indentations 50 may comprise a hole at the bottom, or several separate holes between the spherical indentations 50 are provided.

When the installation rail component 38 is attached to the base rail component 36, the floor panel 26 is clamped between the base rail component 36 and the installation rail component 38 in a vertical direction and is held in the longitudinal and lateral direction through the engaging cutouts 26 and protrusions 56. By the sealing component 48, ingress of humidity from above the floor to the base rail component 36 is prevented. To further improve this, the top surface 12 of the floor panel 26 may comprise a further sealing component 48, which additionally seals a transition between the installation rail component 38 and the top surface 12 of the floor panel 26. By using the sealing components 48, an excessive clamping force can also be prevented due to the inherent elasticity of the sealing components 48. It is to be understood, that a seat rail 34 may be used to clamp a pair of oppositely arranged floor panels 26 or a series of pairs of floor panels 26.

Fig. 4 shows another installation rail component 62 that may be used in the floor system 32. Here, the installation rail component 62 is not completely flat, but exemplarily has a T-shape. At an installation surface 64 at its top, a series of first holes 66 and second holes 68 is provided. The first holes 66 completely reach through the installation component 62 in a vertical direction. This allows to place fasteners 60 in the first holes 66 for attaching the installation rail component 62 to the base rail component 36. The second holes 68 are created as blind holes, which have an end surface 70. Both the first holes 66 and the second holes 68 are capable of receiving fittings for attaching objects to the installation rail component 62.

Due to the T-shape, the installation rail component 62 has two lateral projections 72 that laterally extend along the lengthwise extension of the installation rail component 62 and span up the installation surface 64. Underneath the lateral projections, a lateral receiving surface 74 is provided, which has a series of projections 76 for engaging with cutouts 18 of the floor panel 2 shown in fig. 1.

In analogy to fig. 3, sealing components 48 can be provided on the top surface 12 of the floor panel 2 as well as on the base surface 46 of the base rail component 36.

Fig. 5 shows the connection edge of the floor panel 2, wherein in addition to the core filling material 20 an edge cap 77 is provided. It encloses the top cover 4, the bottom cover 6 and the honeycomb core 8 together with the core filling material 20 in an edge region. To provide a flush top surface 12 and a flush bottom surface 14, legs 79 of the edge cap 77, that rest on the top cover 4 and the bottom cover 6, are arranged in elongated recesses 75 that extend along the connection edge 10 and that are provided in the form of a reduced thickness of the respective cover 4 or 6. Here, the edge cap 77 comprises the connection edge 10. The honeycomb core 8 and the covers 4 and 6 are protected from mechanical damage.

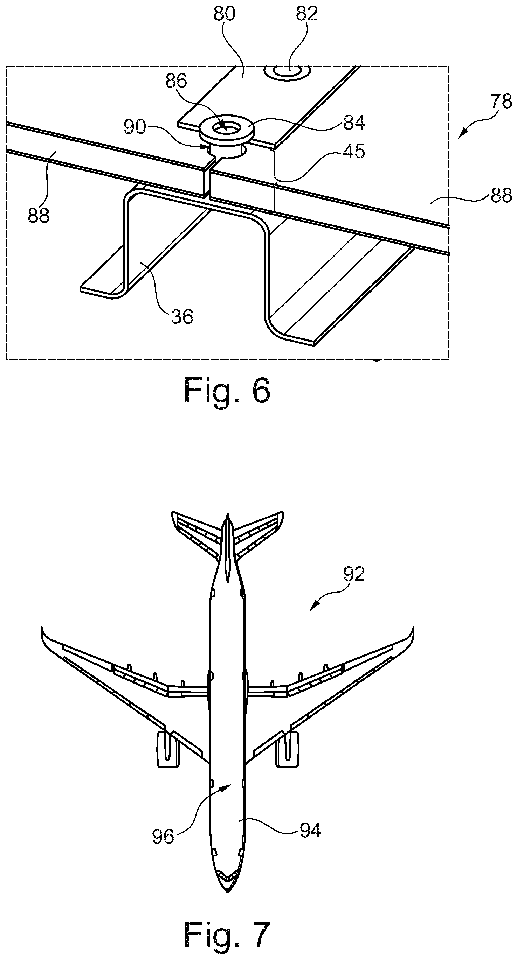

Fig. 6 shows a further exemplary embodiment of the floor system 78, which comprises an installation rail component 80 that is completely flat and comprises a series of through-holes 82 for leading fastening bushings 84 through. The fastening bushings 82 are connectable to the base rail component 36, e.g. through threaded holes arranged in the base surface 46. The fastening bushings 84 comprise an installation hole 86, which is capable of receiving a fitting for attaching an object to the installation rail component 80.

Floor panels 88 are provided that exemplarily comprise cylindrical cutouts 90 at the connection edge 10 that correspond to lateral surfaces of the bushings 84. Thus, a form-fit engagement is provided.

Lastly, fig. 6 shows an aircraft 92 having a fuselage 94 with a cabin 96 integrated therein. The cabin 96 comprises at least one floor system 32 or 78 for creating a floor in the cabin 96.

### Reference numerals

- 2: floor panel
- 4: top cover
- 6: bottom cover
- 8: honeycomb core
- 10: connection edge
- 12: top surface
- 14: bottom surface
- 16: serrated edge surface
- 18: lateral cutout
- 20: core filling material
- 22: floor panel
- 24: undulating edge surface
- 26: floor panel
- 28: spherical cutout
- 30: edge region
- 32: floor system
- 34: seat rail
- 36: base rail component
- 38: installation rail component
- 40: bottom flange
- 42: bridge section
- 44: web section
- 46: base surface
- 47: receiving surface
- 48: sealing element
- 50: spherical indentation
- 52: installation surface
- 54: underside
- 56: spherical protrusions
- 58: borehole
- 60: fastener
- 62: installation rail component
- 64: installation surface
- 66: first hole
- 68: second hole
- 70: end surface
- 72: lateral projection
- 74: lateral receiving surface
- 75: elongated recess
- 76: projection
- 77: edge cap
- 78: floor system
- 79: leg
- 80: installation rail component
- 82: through-hole
- 84: fastening bushing
- 86: installation hole
- 88: floor panel
- 90: circular cutout
- 92: aircraft
- 94: fuselage
- 96: cabin

- R: radius

## Claims

1. A floor system (32, 78) for a cabin of a vehicle (92), comprising:
at least one floor panel (2, 22, 26, 88),
at least one seat rail (34) having an installation surface (52, 64), a base surface (46) underneath the installation surface (52, 64) in a distance thereto, and at least one recess (45) between the installation surface (52, 64) and the base surface (46) and extending along the seat rail (34),
wherein the floor panel (2, 22, 26, 88) has a top surface (12), a bottom surface (14) and at least one connection edge (10) extending between the top surface (12) and the bottom surface (14),
wherein the seat rail (34) is adapted to vertically clamp the floor panel (2, 22, 26, 88) inside the at least one recess (45),
wherein the at least one connection edge (10) has a continuously undulating or serrated edge surface (16, 24), and
wherein the at least one recess (45) comprises an outwards-facing lateral receiving surface (47, 74) that is at least partially complementary to the edge surface (16, 24) of the at least one connection edge (10) to provide a form-fit engagement with the floor panel (2, 22, 26, 88).

2. The floor system (32, 78) of claim 1,
wherein the floor panel (2, 22, 26, 88) comprises a honeycomb structure (8) enclosed between a top cover (4) and a bottom cover (6), and
wherein the connection edge (10) comprises a core filling material (20) reaching into open cells of the honeycomb structure (8) to increase the stability of the connection edge (10).

3. The floor system (32, 78) of claim 2,
wherein the core filling material (20) comprises a plastic material.

4. The floor system (32, 78) of any of the preceding claims,
wherein the floor panel (2, 22, 26, 88) comprises an edge cap (77) laterally bonded to the floor panel (2, 22, 26, 88),
wherein the edge cap (77) comprises the connection edge (10).

5. The floor system (32, 78) of any of the preceding claims,
further comprising a sealing component (48) arranged on the top surface (12) and/or the bottom surface (14) of the floor panel (2, 22, 26, 88) adjacent to the connection edge (10).

6. The floor system (32, 78) of any of the preceding claims,
wherein the connection edge (10) comprises a series of cylindrical cutouts (90) or partially spherical cutouts (28) distributed on the connection edge (10) in a distance to each other and at least reaching through the top surface (12) of the floor panel (2, 22, 26, 88).

7. The floor system (32, 78) of any of the preceding claims,
wherein the seat rail (34) has an installation rail component (38, 62, 80) comprising the installation surface (52, 64), a base rail component (36) comprising the base surface (46), and a plurality of connecting components (60, 84),
wherein the connection components (60, 84) are connected to the base rail component (36) and the installation rail component (38, 62, 80) to arrange the base rail component (36) and the installation rail component in a parallel alignment to each other and to clamp the floor panel (2, 22, 26, 88) inbetween.

8. The floor system (32, 78) of claim 7,
wherein the installation rail component (38, 62, 80) is substantially flat.

9. The floor system (32, 78) of claim 6 and 7 or 8,
wherein the installation rail component (38, 62, 80) comprises a series of partially spherical indentations (50), and
wherein the partially spherical cutouts (28) and the partially spherical indentations (50) are correspondingly shaped.

10. The floor system (32, 78) of claim 6 and 7 or 8,
wherein the installation rail component (38, 62, 80) comprises a series of through-holes (66, 82),
wherein the connection components (60, 84) have a hollow-cylindrical shape, and
wherein the cutouts (18, 28, 90) of the connection edge (10), the spacing of the through-holes (66, 82) and the hollow-cylindrical shape of the connection components (60, 84) correspond to each other, when the connection components (60, 84) are vertically arranged underneath the through-holes (66, 82).

11. The floor system (32, 78) of any of the preceding claims,
wherein the connection edge (10) and the lateral receiving surface (47, 74) comprise a non-corrosive material.

12. The floor system (32, 78) of claim 7,
wherein the installation rail component (38, 62, 80) is made from titanium.

13. Cabin of an aircraft (92), having a floor comprising a floor system (32, 78) of any of the preceding claims, wherein at least one object is arranged on the floor and attached to the seat rail (34).

14. Aircraft (92), comprising an aircraft structure (94) and a cabin of claim 13 arranged therein.
